Europäisches Patentamt

European Patent Office

Office européen des brevets

(19)

(11) **EP 1 180 538 A2**

(12) **EUROPÄISCHE PATENTANMELDUNG**

(43) Veröffentlichungstag:
  **20.02.2002 Patentblatt 2002/08**

(51) Int Cl.⁷: **C09C 1/36**

(21) Anmeldenummer: **01118187.2**

(22) Anmeldetag: **27.07.2001**

(84) Benannte Vertragsstaaten:
  **AT BE CH CY DE DK ES FI FR GB GR IE IT LI LU MC NL PT SE TR**
  Benannte Erstreckungsstaaten:
  **AL LT LV MK RO SI**

(30) Priorität: **14.08.2000 DE 10040308**

(71) Anmelder: **Sachtleben Chemie GmbH**
  **47198 Duisburg (DE)**

(72) Erfinder: **Winkler, Jochen, Dr.**
  **47509 Rheurdt (DE)**

(74) Vertreter: **Uppena, Franz, Dr. et al**
  **Dynamit Nobel AG Patente, Marken & Lizenzen**
  **53839 Troisdorf (DE)**

(54) **Verfahren zur Durchsatzerhöhung beim Kalzinieren von Titandioxid-Pigmenten**

(57) Beschrieben wird ein Verfahren zum Kalzinieren von Titandioxid-Pigmenten, bei dem ein Titanoxidhydrat bei Temperaturen zwischen 700 und 1300 °C in einem Ofen geglüht und anschliessend in einer Kühltrommel gekühlt wird, wobei durch Einspritzen von Wasser in den Kalzinationsofen an dessen Auslauf oder in den vom Ofen zur Kühltrommel führenden Fallschacht oder in die Kühltrommel die Temperatur des Ofenaustrags auf Werte von 400 bis 900 °C abgesenkt wird, wobei die Temperaturabsenkung mindestens 100 °C beträgt.

EP 1 180 538 A2

**Beschreibung**

Die Erfindung betrifft ein Verfahren zur Durchsatzerhöhung beim Kalzinieren von Titandioxid-Pigmenten.

Titandioxid-Pigmente können nach dem Sulfatverfahren hergestellt werden. Dabei wird ein Titanoxidhydrat ("Metatitansäure") gefällt, von anhaftenden, farbgebenden Fremdmetallverunreinigungen durch Bleichen und Auswaschen gereinigt, mit Glühsalzen versehen und anschließend bei Temperaturen um etwa 1000°C in einem Drehrohrofen mit direkter Beheizung durch Verbrennen von Gas geglüht. Das geglühte Material wird später aufgemahlen und i. d. R. durch anorganische und organische Oberflächenbehandlungen weiter modifiziert.

Zwischen dem Austrag aus dem Drehrohrofen und der Mahlung muß das Titandioxid abgekühlt werden. Hierzu dient z.B. eine rotierende Kühltrommel. Gewöhnlich wird der Austrag des Kalzinationsofens (TiO$_2$) durch einen Fallschacht in die Kühltrommel übergeleitet. Die Kühltrommel ist ein gedrehtes Rohr, in dem das Titandioxid seinen Wärmeinhalt durch Strahlung und durch Luftkonvektion so weit abgibt, dass eine nachfolgende Weiterverarbeitung möglich ist.

Bei einer Durchsatzerhöhung im Glühofen wird irgendwann eine Beschickungsrate erreicht, bei der die Kühlkapazität der Kühltrommel nicht mehr ausreicht. Dadurch ergeben sich Probleme bei der Handhabung des Titandioxids am Austrag der Kühltrommel. Ein weiterer Nachteil ist die hohe Wärmeabstrahlung der Kühltrommel an ihre Umgebung. Durch Wärmestrahlung und Wärmeleitung erhitzen sich ausserdem die Lager, auf denen sich die Kühltrommel dreht, in kritischer Weise.

In der Vergangenheit gab es aus unterschiedlichen Beweggründen zahlreiche Vorschläge, die die Kühlung des Ofenaustrags zum Gegenstand hatten.

Die US 2286882 beschreibt ein Verfahren zur Herstellung von TiO$_2$, wobei nach einem ersten Kalzinationsschritt das Glühgut an der Luft auf eine niedrigere Temperatur gekühlt wird, um dann eine weitere Glühung bei niedrigerer Temperatur durchzuführen.

Die GB 500012 schlägt vor, Titandioxid nach einer Kalzination bei 950°C durch kalte Luft rasch auf 750°C abzukühlen und dann in gewohnter Weise weiterzuverarbeiten.

Die US 2231455 beschreibt eine Salzbehandlung einer Metatitansäure mit Vanadium und Alkalisalzen und einer anschließenden Glühung bei 800°C bis 1050°C unter Kohlenmonoxid-Gas, gefolgt von einer Abkühlung auf Temperaturen von weniger als 600°C durch Stehenlassen an der Luft.

In der EP 0026948 A1 wird Titandioxid nach der Kalzination durch Eintrag in Wasser "abgeschreckt" (englisch: "quenching"), d.h. auf Temperaturen von unter 100°C gebracht, wobei dies vorzugsweise an Ofenausträgen mit einer Temperatur zwischen 750 und 950 °C geschieht. Es ergeben sich fotostabilere Pigmente, indem unterstöchiometrische Titanoxide , TiO$_x$, mit x < 2 entstehen. Dieses Verfahren weist allerdings folgende Nachteile auf:

1. Unterstöchiometrische Titanoxide sind nicht mehr weiß, sondern haben einen Farbstich, der sie als Weißpigmente unbrauchbar werden läßt.

2. Beim Abschrecken durch Eintragen des glühenden Titandioxids in Wasser entstehen Brüden. Unter Produktionsbedingungen entstehen diese in solchen Mengen, dass sie ein verfahrenstechnisches Problem darstellen.

Aufgabe der Erfindung ist es, die Nachteile des Standes der Technik zu vermeiden und ein Verfahren zur Durchsatzerhöhung beim Kalzinieren von Titandioxid-Pigmenten zu schaffen, bei dem die Temperatur des Ofenaustrags auf Temperaturen von 400 bis 900 °C abgesenkt wird und damit aufgrund von geringerer Wärmebelastung der Kühltrommel ein erhöhter Durchsatz erreicht werden kann. Weiterhin soll bei dem Verfahren die Bildung von unterstöchiometrischen Titanoxiden vermieden werden.

Die Aufgabe wird gelöst durch ein Verfahren zum Kalzinieren von Titandioxid-Pigmenten, bei dem ein Titanoxidhydrat bei Temperaturen zwischen 700 und 1300 °C in einem Ofen geglüht und anschliessend in einer Kühltrommel gekühlt wird, wobei durch Einspritzen von Wasser in den Kalzinationsofen an dessen Auslauf oder in den vom Ofen zur Kühltrommel führenden Fallschacht oder in die Kühltrommel die Temperatur des Ofenaustrags auf Temperaturen von 400 bis 900 °C abgesenkt wird, wobei die Temperaturabsenkung mindestens 100 °C, bevorzugt mindestens 200 °C, beträgt.

Die Enthalpiedifferenz (HT - H $_{293,16}$) von TiO$_2$ (Rutil) bei der Temperatur T und der Temperatur 293,16 K ist gegeben durch (H.J McDonald, H. Seltz, J. Am. Soc. 61, 1939, S. 2405- 2407, zitiert nach Gmelins Handbuch der Anorganischen Chemie, 8. Auflage, Band Titan, Seite 243, Verlag Chemie, Weinheim, 1951):

$$H_T - H\ 293,16 = 4,18\ (17,14\ T + 0,00049\ T^2 + 350000/T - 6328)\ \text{Joule pro Mol}$$

Bei der Abkühlung von TiO$_2$ von 1273 K auf 293 K (20 °C) müssen ca. 866,6 kJ/kg (Molekulargewicht von

TiO$_2$: 0,07988 kg) abgeführt werden. Nimmt man zum Abschrecken Wasser von 20 °C mit einer Enthalpie von 85,67 kJ/kg und verdampft dieses Wasser bei 100 °C, so hat der Dampf eine Enthalpie von 2676 kJ/kg. Die Enthalpiedifferenz ist also 2590,3 kJ/kg. Bei einer Tagesproduktion von 300 Tonnen Titandioxid wären das etwa 100 Tonnen Wasser, die verdampft werden müssten.

Bei dem erfindungsgemässen Verfahren wird hingegen der Ofenaustrag nur so weit abgekühlt (auf 400 bis 900 °C), dass keine unterstöchiometrischen Titanoxide entstehen, und nur so weit, dass die Kühlkapazität der Kühltrommel für den weiteren Ablauf der Produktion ausreicht.

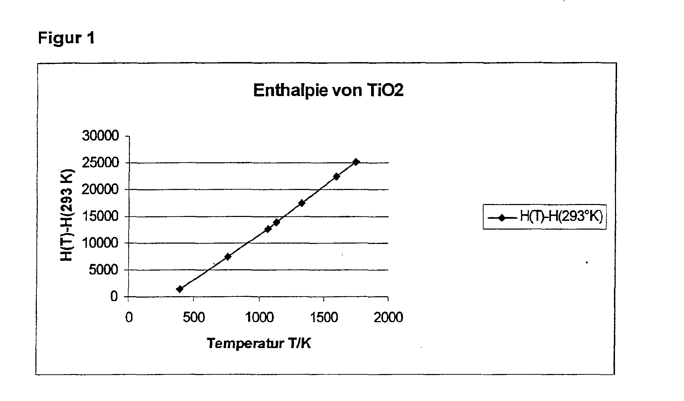

Da die Enthalpie von TiO$_2$ in etwa linear mit der Temperatur zunimmt (vergl. Figur 1), nimmt in erster Näherung die Kühlkapazität der Kühltrommel linear mit abfallender Ofenaustragtemperatur zu. Eine Absenkung der Temperatur von 1000 °C auf 800 °C erhöht also den möglichen Durchsatz um ca. 20%. Hierbei werden dem TiO$_2$ lediglich 185,5 kJ/kg an Wärme entzogen. Um 300 Tagestonnen Titandioxid von 1000 °C auf 800 °C abzukühlen, sind somit maximal 21 Tonnen Wasser notwendig (lediglich die Wasserverdampfung gerechnet). Die dabei entstehenden Brüden sind kein verfahrenstechnisches Problem, da sie gemäss einer bevorzugten Ausgestaltung der Erfindung unter Nutzung des Kamineffektes des Ofens durch den Ofen abgezogen werden können.

Die Zugabe des Wassers zur Abkühlung des Titandioxid-Pigments erfolgt entweder direkt in den Ofen, zweckmässigerweise in die Nähe des Austrags zur Kühltrommel hin, oder aber bevorzugt direkt in den Fallschacht, der den Ofen mit der Kühltrommel verbindet. Dadurch werden die entstehenden Brüden durch die Kaminwirkung des Ofens durch den Ofen abgezogen und stören nicht bzw. müssen nicht durch separate Verfahren unschädlich gemacht werden. Auch kann die Zugabe des Wassers in die Kühltrommel erfolgen.

Der Vorteil des erfindungsgemässen Verfahrens zum Kalzinieren von Titandioxid-Pigmenten besteht in einem erhöhten Durchsatz. Durch eine direkte Kühlung mit Wasser kann die Temperatur des Austrags aus dem Kalzinationsofen wirtschaftlich auf solche Werte gesenkt werden, welche die Kühltrommel und die nachfolgenden Stationen der Titandioxid-Pigmentherstellung nicht überlasten.

**Patentansprüche**

1.  Verfahren zum Kalzinieren von Titandioxid-Pigmenten, bei dem ein Titanoxidhydrat bei Temperaturen zwischen 700 und 1300 °C in einem Ofen geglüht und anschliessend in einer Kühltrommel gekühlt wird, **dadurch gekennzeichnet, dass** durch Einspritzen von Wasser in den Kalzinationsofen an dessen Auslauf oder in den vom Ofen zur Kühltrommel führenden Fallschacht oder in die Kühltrommel die Temperatur des Ofenaustrags auf Werte von 400 bis 900 °C abgesenkt wird, wobei die Temperaturabsenkung mindestens 100 °C beträgt.

2.  Verfahren nach Anspruch 1, **dadurch gekennzeichnet, dass** die Temperaturabsenkung mindestens 200 °C beträgt.

3.  Verfahren nach Anspruch 1 oder 2, **dadurch gekennzeichnet, dass** die entstehenden Brüden durch den Ofen abgezogen werden.

**Figur 1**